# EUROPEAN PATENT SPECIFICATION

(11) **EP 2 963 725 B1**
(45) Date of publication and mention of the grant of the patent: **21.11.2018**
(21) Application number: 15174005.7
(22) Date of filing: 26.06.2015
(51) Int. Cl.: H01M 8/2475, H01M 8/04089, H01M 8/0432, H01M 8/04746, F24D 12/02, F24D 19/10

(54) **FUEL CELL SYSTEM**
BRENNSTOFFZELLENSYSTEM
SYSTÈME DE PILE À COMBUSTIBLE

(30) Priority: 30.06.2014 JP 2014134698
(43) Date of publication of application: 06.01.2016
(73) Proprietor: AISIN SEIKI KABUSHIKI KAISHA, Kariya-shi, Aichi 448-8650 (JP); ROBERT BOSCH GMBH, 70442 Stuttgart (DE)
(72) Inventor: OHKAWARA, Hiroki, Kariya-shi,, Aichi 448-8650 (JP); LIMBECK, Uwe, 70442 Stuttgart (DE); KLEINEIKENSCHEIDT, Gerold, 70442 Stuttgart (DE); HERBERT, Christian, 70442 Stuttgart (DE)
(74) Representative: TBK

(56) References cited:
- EP-A1- 2 028 709
- EP-A1- 2 221 906
- EP-A1- 2 637 241
- EP-A1- 2 660 914
- JP-A- 2013 073 923
- US-A1- 2013 294 130

## Description

### TECHNICAL FIELD

The present invention relates to a combination of a fuel cell system and a combustion device.

### BACKGROUND ART

As a vehicle type fuel cell system that has features similar to those of the fuel cell system used in the present invention, an example disclosed in Patent Literature 1 is known.

As an indoor installation type fuel cell system that suctions and discharges air by using a double pipe duct, an example disclosed in Patent Literature 2 or Patent Literature 3 is known. In a fuel cell system disclosed in Patent Literature 2, air is suctioned through an intake duct, a combustion exhaust gas and a cathode off-gas from a fuel cell or ventilation air for refreshing the inside of the system are discharged in a mixed state through an exhaust duct, and a ventilation fan is provided in a gas mixing unit of the exhaust duct.

In the fuel cell system disclosed in Patent Literature 2, since air is suctioned and discharged by the ventilation fan, the pressure inside the fuel cell system may be maintained at a pressure slightly lower than the external pressure. Accordingly, even when a gas leaks from the fuel cell, the gas may be discharged from the exhaust duct to an outdoor place while the gas does not leak into a peripheral indoor place.

Meanwhile, in the fuel cell system disclosed in Patent Literature 3, air is suctioned from the intake duct by suctioning a combustion air and cathode air by pumps, and accordingly an exhaust gas such as a combustion exhaust gas and a cathode off-gas is discharged through the exhaust duct. Further, in order to suppress water droplets caused by the condensation of an exhaust gas of a boiler provided along with the system from entering the fuel cell system, the fuel cell system is provided above an exhaust port of the boiler.

Patent Literature 4 discloses a combustion device and a fuel cell system sharing the same chimney.

### PRIOR ART DOCUMENTS

### PATENT DOCUMENTS

[Patent Literature 1] EP 2 028 709 A1
[Patent Literature 2] JP 2006-253020 A
[Patent Literature 3] JP 2012-199068 A
[Patent Literature 4] EP2637241 A1

### SUMMARY OF THE INVENTION

### PROBLEMS TO BE SOLVED BY THE INVENTION

In the fuel cell system disclosed in Patent Literature 2, when the boiler is provided along with the fuel cell system, there is a concern that the exhaust of the boiler may flow reversely toward the fuel cell system through the exhaust port when the fuel cell system is stopped, that is, the ventilation fan is stopped. In that case, a failure of a device may be caused by the condensation of steam in the exhaust gas discharged from the boiler. Further, there is a concern that a gas leakage alarm may be erroneously generated when a gas sensor is operated due to a non-combustion gas discharged from the boiler.

Meanwhile, in the fuel cell system disclosed in Patent Literature 3, the fuel cell system is provided above the exhaust port of the boiler. Accordingly, it is possible to suppress the water droplets caused by the condensation of the exhaust gas of the boiler from entering the fuel cell system. However, it is difficult to suppress the flowing of the exhaust gas of the boiler, and hence the same problem as Patent Literature 2 occurs.

The invention is made to solve the above-described problems, and an object thereof is to provide a combination of a fuel cell system and a combustion device capable of suppressing an exhaust gas from flowing from the combustion device into a fuel cell chamber even when air is suctioned into and discharged from the combustion device by using the same intake and exhaust duct as the fuel cell system.

### SOLUTIONS TO THE PROBLEMS

In order to solve the above-described problems, Aspect 1 of the invention provides a combination of a fuel cell system and a combustion device as defined in claim 1.

According to Aspect 1 of the invention, since the inside of the fuel cell chamber may be air-tightly maintained due to the check valve provided at the intake unit of the ventilation exhaust line, it is possible to suppress the exhaust gas from flowing from the combustion device into the fuel cell chamber even when air is suctioned into and discharged from the combustion device by using the same intake and exhaust duct as the fuel cell system. Further, since the check valve is provided at the intake unit of the ventilation exhaust line, an operation failure of the check valve does not occur due to the adhesion of the condensed water of the exhaust gas of the combustion device.

According to Aspect 1 of the invention, since the first fan is driven based on the driving signal for the combustion device even when the fuel cell system is in a standby state, it is possible to suppress the exhaust gas of the combustion device from flowing reversely toward the fuel cell chamber due to the discharge action of the first fan while the combustion device is driven even when the fuel cell system is in a standby state.

Aspect 2 of the invention provides a combination of a fuel cell system and a combustion device as defined in claim 2.

According to Aspect 2 of the invention, since the second fan which suctions air into the fuel cell chamber is provided at the suction side or the discharge side of the check valve, it is possible to promptly open the check valve by driving the second fan.

According to Aspect 2 of the invention, since the second fan is driven based on the driving signal for the combustion device even when the fuel cell system is in a standby state, it is possible to maintain the pressure inside the fuel cell chamber in a positive pressure state while the combustion device is driven even when the fuel cell system is in a standby state, and hence to suppress the exhaust gas of the combustion device from flowing reversely toward the fuel cell chamber. Further, it is possible to further prevent the reverse flow together with the check valve.

Aspect 3 of the invention provides the combination of the fuel cell system and the combustion device according to Aspect 2, wherein a control chamber is provided which is connected to the inside of the fuel cell chamber and accommodates a control device and an inverter device converting power generated by the fuel cell into AC power, and air suctioned by the second fan is caused to flow into the fuel cell chamber through the control chamber.

According to Aspect 3 of the invention, since the air which is suctioned by the second fan is caused to flow into the fuel cell chamber through the control chamber accommodating the inverter device and the control device, electrical appliances such as an inverter device may be appropriately cooled by the second fan.

Aspect 4 of the invention provides the combination of the fuel cell system and the combustion device according to Aspect 3, wherein a temperature sensor is provided inside the control chamber, and a ventilation error signal is outputted when the temperature sensor detects a state where the temperature inside the control chamber becomes a determination temperature or higher.

According to Aspect 4 of the invention, since the ventilation error signal is outputted by the temperature sensor provided inside the control chamber so as to detect a state where the temperature inside the control chamber becomes a predetermined temperature or higher, it is possible to promptly detect the ventilation error based on an increase in the temperature inside the control chamber having a small capacity.

### BRIEF DESCRIPTION OF THE DRAWINGS

[Fig. 1] Fig. 1 is an outline diagram illustrating a state where, in accordance with the invention, a fuel cell system is connected to an exhaust of a combustion device by a chimney.
[Fig. 2] Fig. 2 is an outline diagram illustrating the fuel cell system according to an embodiment of the invention.
[Fig. 3] Fig. 3 is a flowchart of a control program that is executed by a control device shown in Fig. 2.
[Fig. 4] Fig. 4 is a flowchart of a control program that is executed by the control device shown in Fig. 2.
[Fig. 5] Fig. 5 is an outline diagram illustrating a part of a fuel cell system according to a first modified example of the invention.
[Fig. 6] Fig. 6 is an outline diagram illustrating a part of a fuel cell system according to a second modified example of the invention.

### EMBODIMENT OF THE INVENTION

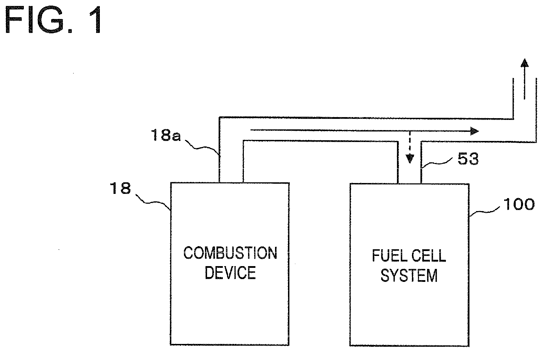

Hereinafter, a combination of a fuel cell system and a combustion device according to an embodiment of the invention will be described with reference to the drawings. As shown in Fig. 1, a fuel cell system 100 is provided in an indoor place along with a combustion device 18 such as a boiler. The combustion device 18 uses, for example, a hydrocarbon material gas together with air in a combustion state in order to supply hot water, and a chimney 18a of the combustion device 18 communicates with a chimney unit 53 of the fuel cell system 100.

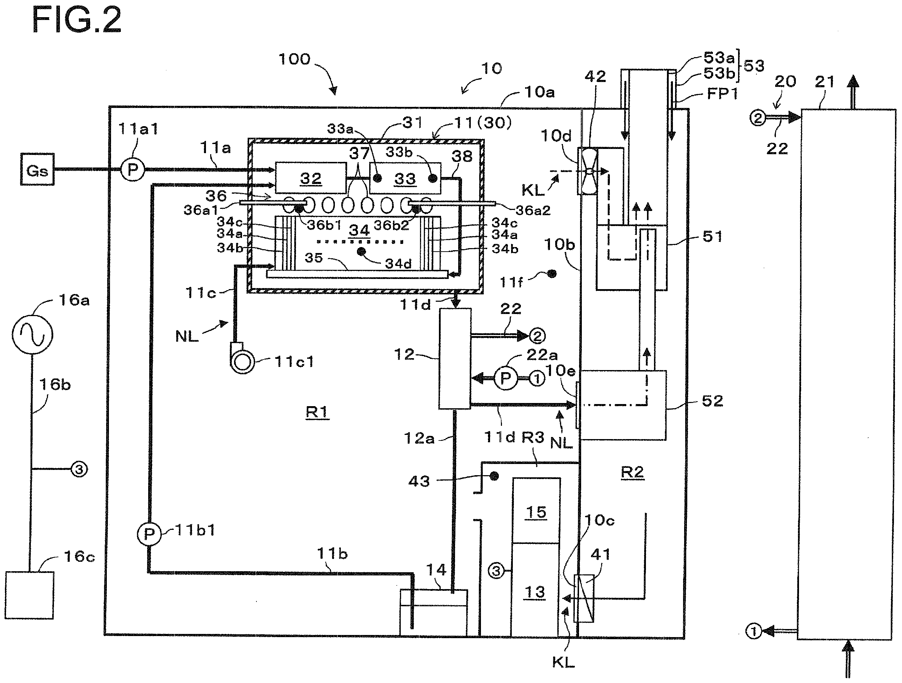

As shown in Fig. 2, the fuel cell system 100 includes a power generation unit 10 and a hot-water storage tank 21. The power generation unit 10 includes a housing 10a, a fuel cell module 11, a heat exchanger 12, an inverter device 13, a water tank 14, and a control device 15.

The fuel cell module 11 includes at least a fuel cell 34. A reforming material, reforming water, and cathode air are supplied to the fuel cell module 11. Specifically, the fuel cell module 11 is connected to the other end of a reforming material supply pipe 11a of which one end is connected to a supply source Gs so that a reforming material is supplied thereto. The reforming material supply pipe 11a is provided with a material pump 11a1. Further, the fuel cell module 11 is connected to the other end of a water supply pipe 11b of which one end is connected to the water tank 14 so that reforming water is supplied thereto. The water supply pipe 11b is provided with a reforming water pump 11b1. Further, the fuel cell module 11 is connected to the other end of a cathode air supply pipe 11c of which one end is connected to a cathode air blower 11c1 as an oxidant gas supply device so that cathode air is supplied thereto.

The heat exchanger 12 is a heat exchanger to which a combustion exhaust gas discharged from the fuel cell module 11 and hot storage water in the hot-water storage tank 21 are supplied so as to exchange heat between the combustion exhaust gas and the hot storage water. Specifically, the hot-water storage tank 21 is used to store hot storage water, and is connected to a hot storage water circulation line 22 through which the hot storage water is circulated (circulated in a direction indicated by the arrow of Fig. 2). A hot storage water circulation pump 22a and the heat exchanger 12 are provided on the hot storage water circulation line 22 in this order from the lower end of the hot-water storage tank 21 to the upper end thereof. The heat exchanger 12 is connected (by penetration) to an exhaust pipe 11d extending from the fuel cell module 11. The heat exchanger 12 is connected to a condensed water supply pipe 12a connected to the water tank 14.

In the heat exchanger 12, the combustion exhaust gas discharged from the fuel cell module 11 is introduced into the heat exchanger 12 through the exhaust pipe 11d, and exchanges heat with the hot storage water so as to be condensed and cooled. The condensed combustion exhaust gas is discharged to the outside through the exhaust pipe 11d and a combustion exhaust gas exhaust port 10e. Further, the condensed water is supplied to the water tank 14 through the condensed water supply pipe 12a. Moreover, the water tank 14 purifies the condensed water by an ion exchange resin.

An exhaust heat recovery system 20 includes the heat exchanger 12, the hot-water storage tank 21, and the hot storage water circulation line 22. The exhaust heat recovery system 20 recovers the exhaust heat of the fuel cell module 11 so as to be stored in the hot storage water.

Further, the inverter device 13 inputs a DC voltage output from the fuel cell 34, converts the DC voltage into a predetermined AC voltage, and outputs the AC voltage to a power source line 16b connected to an AC system power source 16a and an external power load 16c (for example, electrical appliances). Further, the inverter device 13 inputs the AC voltage supplied from the AC system power source 16a through the power source line 16b, converts the AC voltage into a predetermined DC voltage, and outputs the DC voltage to an auxiliary machine or the control device 15 to be described later. The auxiliary machine includes a reforming water pump 11b1, a material pump 11a1, and a cathode air blower 11c1 which are driven by a motor so as to supply a reforming material, water, and air to the fuel cell module 11. These auxiliary machines are driven by the DC voltage.

The fuel cell module 11(30) includes a housing 31, an evaporation unit 32, a reforming unit 33, the fuel cell 34, and a combustion unit 36. The housing 31 is formed of a heat insulating material into a box shape.

The evaporation unit 32 is heated by a combustion gas to be described later so as to generate steam by evaporating reforming water supplied thereto and to pre-heat a reforming material supplied thereto. The evaporation unit 32 mixes the steam generated in this way and the pre-heated reforming material and supplies the mixture to the reforming unit 33. As the reforming material, there is known reforming gas fuel such as a natural gas and an LP gas or reforming liquid fuel such as kerosene, gasoline, and methanol. In the embodiment, a natural gas will be described.

The evaporation unit 32 is connected to the other end of the water supply pipe 11b of which one end (the lower end) is connected to the water tank 14. Further, the evaporation unit 32 is connected to the reforming material supply pipe 11a of which one end is connected to the supply source Gs. The supply source Gs is, for example, a city gas supply pipe or an LP gas container.

Since a heat necessary for the steam reforming reaction is supplied to the reforming unit 33 while the reforming unit is heated by the above-described combustion gas, a reformed gas is generated and derived from the mixed gas (the reforming material and the steam) supplied from the evaporation unit 32. A catalyst (for example, a Ru or Ni-based catalyst) is charged in the reforming unit 33, and the mixed gas is reformed by the reaction with the catalyst so that a gas containing hydrogen gas and carbon monoxide is generated (a so-called steam reforming reaction). The reformed gas contains hydrogen, carbon monoxide, carbon dioxide, steam, an unreformed natural gas (methane gas), and reforming water (steam) not used for the reforming process. In this way, the reforming unit 33 generates a reformed gas (fuel) from a reforming material (raw fuel) and reforming water, and supplies the reformed gas to the fuel cell 34. Moreover, the steam reforming reaction is an endothermic reaction.

The reforming unit 33 includes a temperature sensor 33a which detects a temperature of a portion into which a reforming material and reforming water (steam) flow. The temperature sensor 33a is provided in a portion into which the reforming material and the reforming water (the steam) flow in the reforming unit 33. The temperature sensor 33a is configured to transmit the detection result to the control device 15. The reforming unit 33 includes a temperature sensor 33b which detects a temperature of a portion from which the reformed gas flows. The temperature sensor 33b is provided in a portion from which the reformed gas flows in the reforming unit 33. The temperature sensor 33b is configured to transmit the detection result to the control device 15.

The fuel cell 34 has a configuration in which a fuel electrode, an air electrode (an oxidant electrode), and a plurality of cells 34a interposed between both electrodes and formed of electrolyte are stacked. The fuel cell of the embodiment is a solid oxide fuel cell, and zirconium oxide which is one kind of solid oxides is used as the electrolyte. A hydrogen gas, a carbon monoxide gas, a methane gas, and the like are supplied as fuel to the fuel electrode of the fuel cell 34. The operation temperature is about 400 to 1000°C. Moreover, a natural gas or a coal gas may be directly used as fuel in addition to the hydrogen gas. In this case, the reforming unit 33 may not be provided.

A fuel flow channel 34b used for the circulation of a reformed gas as fuel is formed at the fuel electrode side of the cell 34a. An air flow channel 34c used for the circulation of air (cathode air) as an oxidant gas is formed at the air electrode side of the cell 34a. The fuel cell 34 includes a temperature sensor 34d which detects the temperature of the fuel cell 34. The temperature sensor 34d is configured to transmit the detection result to the control device 15.

The fuel cell 34 is provided on a manifold 35. A reformed gas is supplied from the reforming unit 33 to the manifold 35 through the reformed gas supply pipe 38. The lower end (one end) of the fuel flow channel 34b is connected to the fuel outlet of the manifold 35, and a reformed gas which is derived from the fuel outlet is introduced from the lower end and is derived from the upper end thereof. Cathode air which is sent by the cathode air blower 11c1 is supplied through the cathode air supply pipe 11c, is introduced from the lower end of the air flow channel 34c, and is derived from the upper end thereof.

A combustion unit 36 is provided between the fuel cell 34 and a group of the evaporation unit 32 and the reforming unit 33. The combustion unit 36 heats the reforming unit 33 by burning an anode off-gas (a fuel off-gas) from the fuel cell 34 and a cathode off-gas (an oxidant off-gas) from the fuel cell 34.

A flame 37 is generated in the combustion unit 36 due to the combustion of the anode off-gas. The combustion unit 36 includes a pair of ignition heaters 36a1 and 36a2 which ignites an anode off-gas. Further, the combustion unit 36 includes a pair of temperature sensors 36b1 and 36b2 which detects the temperature of the combustion unit 36. The temperature sensors 36b1 and 36b2 are configured to transmit the detection result to the control device 15.

The housing 10a is defined as a fuel cell chamber R1 and an exhaust duct chamber R2 which are formed as an air-tight structure by an intermediate panel 10b. The fuel cell module 11, the heat exchanger 12, the inverter device 13, the water tank 14, and the control device 15 are disposed inside the fuel cell chamber R1. A temperature sensor 11f which detects the temperature inside the fuel cell chamber R1 is provided inside the fuel cell chamber R1. A ventilation exhaust duct 51 and a combustion exhaust duct 52 are disposed inside the exhaust duct chamber R2.

The intermediate panel 10b which forms one side of the fuel cell chamber R1 is provided with an intake port 10c which suctions external air into the fuel cell chamber R1, a ventilation exhaust port 10d which discharges air inside the fuel cell chamber R1 to an outdoor place, and the combustion exhaust gas exhaust port 10e which discharges a combustion exhaust gas from the heat exchanger 12 to the outside.

The intake port 10c is provided with a check valve 41. The check valve 41 allows the flow of air from the exhaust duct chamber R2 to the fuel cell chamber R1. However, the check valve 41 suppresses the circulation of air from the exhaust duct chamber R2 into the fuel cell chamber R1 in a normal state where the pressure inside the fuel cell chamber R1 is equal to the pressure of the exhaust duct chamber R2. Then, when the pressure inside the fuel cell chamber R1 becomes a negative pressure, the circulation of the air from the exhaust duct chamber R2 into the fuel cell chamber R1 is allowed while the check valve is opened due to the pressure difference between the fuel cell chamber R1 and the exhaust duct chamber R2.

The ventilation exhaust duct 51 is connected to the ventilation exhaust port 10d. The other end of the ventilation exhaust duct 51 is connected to an inner pipe 53a of the chimney unit 53. The ventilation exhaust port 10d is provided with a first ventilation fan (a first fan) 42. The first ventilation fan 42 is used to discharge air inside the fuel cell chamber R1 from the inner pipe 53a of the chimney unit 53 to an outdoor place through the ventilation exhaust duct 51. When the first ventilation fan 42 is driven, the air (ventilation exhaust) inside the fuel cell chamber R1 is discharged to an outdoor place through the ventilation exhaust port 10d, the ventilation exhaust duct 51, and the inner pipe 53a of the chimney unit 53 (as indicated by the dashed arrow).

A control chamber R3 is formed inside the fuel cell chamber R1, one end of the control chamber R3 is connected to the intake port 10c, and the other end of the control chamber R3 is connected into the fuel cell chamber R1. The control chamber R3 accommodates the inverter device 13 and the control device 15. Accordingly, the ventilation air which is suctioned from the intake port 10c circulates inside the control chamber R3 and flows into the fuel cell chamber R1 so as to cool the inverter device 13 and the control device 15.

A temperature sensor 43 which detects the temperature inside the control chamber R3 is provided in the control chamber R3. The temperature sensor 43 transmits the detection result to the control device 15. Accordingly, when the temperature inside the control chamber R3 increases to a predetermined determination temperature or higher due to the ventilation error or the like, a ventilation error signal is outputted from the control device 15 so as to stop the fuel cell system 100.

A ventilation exhaust line KL is provided with the intake port 10c which is provided inside the housing 10a so as to suction air from the outside and a ventilation exhaust port 10d which is provided inside the housing 10a so as to discharge air inside the fuel cell chamber R1. The ventilation exhaust line KL circulates external air introduced from the intake port 10c through the check valve 41 into the inside of the fuel cell chamber R1 defined inside the housing 10a and discharges the external air from the ventilation exhaust port 10d. The intake unit of the ventilation exhaust line KL includes the intake port 10c, and the exhaust unit of the ventilation exhaust line KL includes the ventilation exhaust port 10d.

One end of the combustion exhaust duct 52 is connected to the combustion exhaust gas exhaust port 10e. The other end of the combustion exhaust duct 52 is connected to the ventilation exhaust duct 51. During the power generation operation of the fuel cell system 100, the combustion exhaust gas which is discharged from the fuel cell module 11 is derived to the ventilation exhaust duct 51 through the combustion exhaust gas exhaust port 10e and the combustion exhaust duct 52 (as indicated by the one-dotted chain arrow) and is merged with the ventilation exhaust. Then, the exhaust gas is discharged to an outdoor place through the ventilation exhaust duct 51 and the inner pipe 53a of the chimney unit 53.

The combustion exhaust line NL is provided with the cathode air supply pipe 11c which causes the fuel cell chamber R1 and the fuel cell 34 to communicate with each other so as to supply air including the oxidant gas inside the fuel cell chamber R1 to the fuel cell 34 and the exhaust pipe 11d which causes the combustion unit 36 and the outside of the fuel cell chamber R1 to communicate with each other so as to discharge the combustion exhaust gas generated in the combustion unit 36 to an outdoor place. The combustion exhaust line NL is independently branched from the halfway position of the ventilation exhaust line KL by the cathode air supply pipe 11c.

The chimney unit 53 is formed as a double pipe structure including the inner pipe 53a and the outer pipe 53b. An intake flow channel FP1 is formed between the inner pipe 53a and the outer pipe 53b. The intake flow channel FP1 causes an outdoor place and the exhaust duct chamber R2 to communicate with each other. External air flows (as intake air) into the exhaust duct chamber R2 through the intake flow channel FP1. Moreover, although not shown in the drawings, the chimney 18a (see Fig. 1) of the combustion device 18 also has the double pipe structure in the same way.

Next, an operation of the fuel cell system 100 will be described. When the fuel cell system 100 is in a standby state, the material pump 11a1 and the cathode air blower 11c1 are respectively stopped.

When an activation switch (not shown) of the fuel cell system 100 is turned on, the fuel cell system 100 is activated so as to start the warming operation (where the fuel cell system does not perform the power generation operation but the temperature of the reforming unit 33 and the fuel cell 34 increases to the power generation operation temperature).

When the warming operation is started, the control device 15 operates the auxiliary machines. Specifically, the control device 15 operates the material pump 11a1 and the reforming water pump 11b1 so as to start an operation of supplying the reforming material and the condensed water (the reforming water) to the evaporation unit 32. Further, the cathode air blower 11c1 is operated so as to start an operation of supplying the cathode air to the fuel cell 34. Then, the anode off-gas which is derived from the fuel cell 34 is ignited by the ignition heaters 36a1 and 36a2 in the combustion unit 36. When the temperature of the reforming unit 33 or the fuel cell 34 becomes a predetermined temperature or higher, the warming operation ends, and the power generation operation starts. The control device 15 controls the auxiliary machines so that the power generated by the fuel cell 34 during the power generation operation becomes the consumption power of the external power load 16c, and supplies the reformed gas and the cathode air to the fuel cell 34.

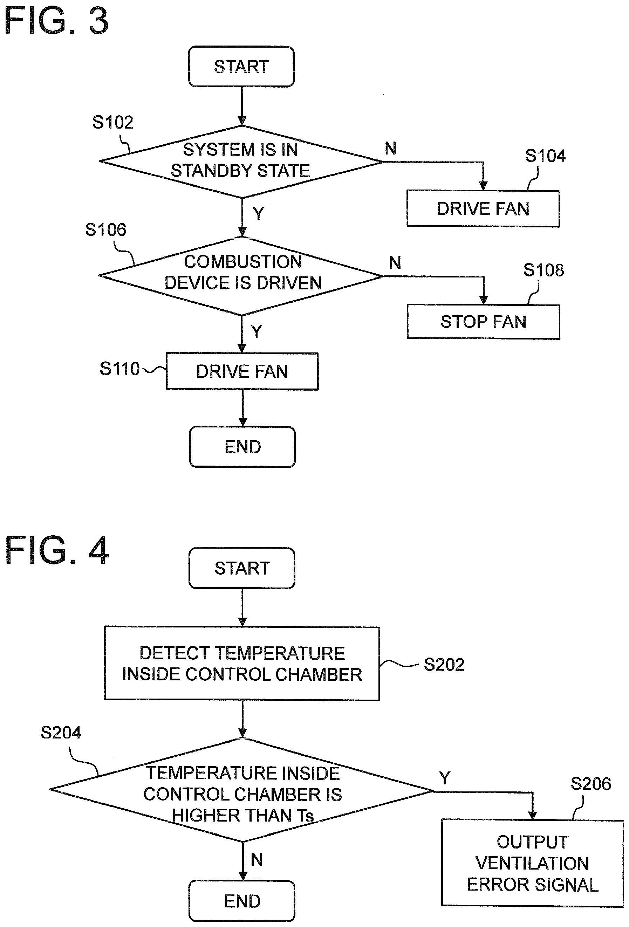

Further, the control device 15 executes a program corresponding to a flowchart shown in Fig. 3 every predetermined time.

In step S102, the control device 15 determines whether the fuel cell system 100 is in a power generation state or is stopped in a standby state. When it is determined that the fuel cell system is operated in step S102, that is, the determination result is "N" in step S102, the control devices moves the program to step S104. In step S104, the first ventilation fan 42 is duty-controlled in response to the temperature inside the fuel cell chamber R1 or the temperature inside the control chamber R3.

For example, when the temperature inside the fuel cell chamber R1 or the temperature inside the control chamber R3 is higher than a predetermined value, a control of suppressing an increase in the temperature inside the fuel cell chamber R1 or the control chamber R3 is performed by increasing the duty (increasing the rotation speed of the first ventilation fan 42). On the contrary, when the temperature inside the fuel cell chamber R1 or the control chamber R3 is low, a control of decreasing the consumption power is performed by decreasing the duty (decreasing the rotation speed of the first ventilation fan 42).

Moreover, the inside of the fuel cell chamber R1 is maintained in a negative pressure state by the first ventilation fan 42 in consideration of a state where the combustible gas flows from the housing 31 accommodating the fuel cell 34 into the fuel cell chamber R1 during the operation (the power generation operation) of the fuel cell system 100. Accordingly, it is possible to suppress the combustible gas from flowing into an indoor place around the fuel cell chamber R1 even when the combustible gas flows into the fuel cell chamber R1. In this case, since it is desirable to suppress a state where the ventilation air does not flow in the fuel cell chamber R1, the first ventilation fan 42 may be driven at the lowest duty. Moreover, the duty control of the first ventilation fan 42 may be effectively used to suppress the consumption power, but the first ventilation fan 42 may be controlled being just turned on and off.

Further, since the flow of air is formed from the ventilation exhaust port 10d of the ventilation exhaust line KL toward the ventilation exhaust duct 51 when the first ventilation fan 42 is driven, the exhaust gas of the combustion device 18 does not flow reversely toward the fuel cell chamber R1 through the ventilation exhaust duct 51 even when the combustion device (the boiler) 18 is driven.

Further, since the check valve 41 which is provided at the intake port 10c is opened so as to maintain the negative pressure inside the fuel cell chamber R1, it is possible to suppress the combustible gas from flowing from the inside of the fuel cell chamber R1 into the peripheral indoor place even when the combustible gas such as a reforming material and fuel flows from the housing 31 into the fuel cell chamber R1. Accordingly, since the combustible gas is discharged to an outdoor place through the ventilation exhaust line KL, the safety may be improved.

When it is determined that the determination result is "Y" in step S102, that is, the fuel cell system 100 is in a standby state, the control device moves the program to step S106. In step S106, the control device 15 determines whether the combustion device 18 is driven by obtaining a status signal of the combustion device 18. When the determination result is "N" in step S106, that is, the combustion device 18 is stopped, the control device moves the program to step S108 so as to stop the first ventilation fan 42. In this case, since the combustion device 18 is not driven, the exhaust gas does not flow reversely from the combustion device 18. Accordingly, it is possible to reduce the consumption power by stopping the first ventilation fan 42.

When the determination result is "Y" in step S106, that is, the combustion device 18 is driven, the control drive moves the program to step S110 so as to drive the first ventilation fan 42. Since the flow of air is formed from the fuel cell system 100 toward the inner pipe 53a of the chimney unit 53 when the first ventilation fan 42 is driven, it is possible to suppress the exhaust gas of the combustion device 18 from flowing reversely toward the fuel cell system 100 (the fuel cell chamber R1) even when the combustion device 18 is driven.

Further, since any heat generating portion does not exist inside the fuel cell chamber R1 and the supply of the material gas is stopped by a valve when the fuel cell system 100 is in a standby state, there is no need to provide a cooling/ventilation function as in the power generation state of the fuel cell system 100. For that reason, it is desirable to drive the first ventilation fan 42 at the lowest duty in which air flows inside the fuel cell chamber R1 along the ventilation exhaust line KL in terms of reducing the consumption power.

By executing the above-described flowchart every predetermined time, the consumption power is reduced, and the reverse flow of the exhaust gas from the combustion device 18 toward the fuel cell system 100 may be suppressed regardless of the operation state of the fuel cell system 100 and the operation state of the combustion device 18. Accordingly, it is possible to prevent a problem such as a failure of an apparatus, and an erroneous detection of a leakage of a gas caused by the adhesion of the condensed water in accordance with the reverse flow of the exhaust gas from the combustion device 18.

Further, the control device 15 executes a program corresponding to a flowchart shown in Fig. 4 every predetermined time.

In step S202, the control device 15 reads a detection temperature detected by the temperature sensor 43 provided inside the control chamber R3. Next, in step S204, the control device 15 determines whether the read detection temperature of the temperature sensor 43 is higher than a predetermined determination temperature Ts. When the detection temperature of the temperature sensor 43 is the determination temperature Ts or lower (the determination result is "N"), the program ends. However, when the detection temperature of the temperature sensor 43 is the determination temperature Ts or higher (the determination result is "Y"), it is determined that the temperature inside the control chamber R3 increases due to the ventilation error. Then, in step S206, a ventilation error signal is outputted.

Accordingly, when the air inside the fuel cell chamber R1 is not suctioned due to the fixed state of the check valve 41 so that the inverter device 13 and the control device 15 increase in temperature while not being cooled, a ventilation error is detected based on the detection temperature of the temperature sensor 43, and hence a ventilation error signal may be outputted. Accordingly, the fuel cell system 100 may be stopped.

Further, since the ventilation/cooling error may be detected based on an increase in the temperature inside the control chamber R3 having a small capacity compared to the fuel cell chamber R1, the ventilation error may be promptly detected and outputted.

According to the above-described embodiment, the fuel cell system 100 includes the first ventilation fan (the first fan) 42 which is provided at the ventilation exhaust port (the exhaust unit) 10d of the ventilation exhaust line KL so as to discharge the air from the inside of the fuel cell chamber R1 and the check valve 41 which is provided at the intake port (the intake unit) 10c of the ventilation exhaust line KL and is configured to suppress the circulation of the air into the inside of the fuel cell chamber R1 from the outside of the fuel cell chamber R1 in a normal state and to allow the circulation of the air into the inside of the fuel cell chamber R1 from the outside of the fuel cell chamber R1 while being opened when the inside of the fuel cell chamber R1 becomes a negative pressure state.

Accordingly, since the inside of the fuel cell chamber R1 may be maintained air-tightly by the check valve 41 provided at the intake port 10c when the fuel cell system 100 is in a standby state, it is possible to suppress the exhaust gas from flowing from the combustion device 18 into the fuel cell chamber R1 even when air is suctioned into and discharged from the combustion device 18 by using the same intake and exhaust duct as the fuel cell system 100.

Furthermore, since the check valve 41 is provided at the intake port 10c of the ventilation exhaust line KL, the operation error of the check valve 41 does not occur due to the adhesion of the condensed water of the exhaust gas of the combustion device 18.

Further, according to the above-described embodiment, the first ventilation fan 42 is driven based on the driving signal for the combustion device 18 even when the fuel cell system 100 is in a standby state. Accordingly, it is possible to suppress the exhaust gas of the combustion device 18 from flowing reversely toward the fuel cell chamber R1 due to the discharge action of the first ventilation fan 42 while the combustion device 18 is driven even when the fuel cell system 100 is in a standby state.

Further, according to the above-described embodiment, the temperature sensor 43 is provided inside the control chamber R3 and the ventilation error is detected and outputted when the control device detects a state where the temperature inside the control chamber R3 becomes a determination temperature or higher based on the detection result of the temperature sensor 43. Accordingly, it is possible to promptly detect the ventilation error based on an increase in the temperature inside the control chamber R3 having a small capacity.

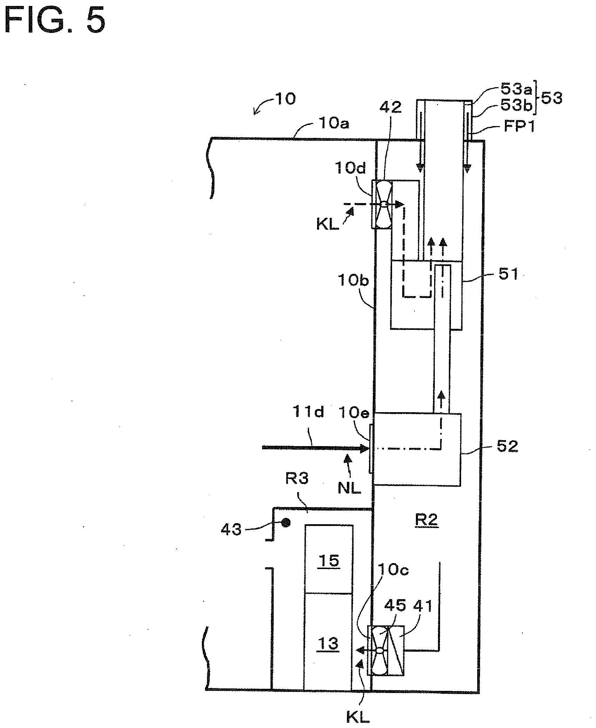

Fig. 5 illustrates a first modified example of the invention. The modified example is different from the above-described embodiment in that a second ventilation fan 45 which suctions air from the intake port 10c into the fuel cell chamber R1 is provided at the discharge side of the check valve 41. Further, since the other configurations are the same as those of the embodiment, the same reference numerals and signs will be given to the same components as the embodiment, and the description thereof will not be presented.

Since the second ventilation fan 45 is provided, the check valve 41 which is normally closed to suppress the circulation of air into the inside of the fuel cell chamber R1 may be promptly opened by generating the flow of air while driving the second ventilation fan 45. Moreover, the same effect may be obtained even when the second ventilation fan 45 is provided at the suction side of the check valve 41.

According to the above-described first modified example, the second ventilation fan 45 which suctions air from the intake port 10c into the fuel cell chamber R1 is provided at the discharge side or the suction side of the check valve 41, it is possible to promptly open the check valve 41 in a closed state by driving the second ventilation fan 45.

Further, according to the above-described first modified example, the control chamber R3 which accommodates the inverter device 13 and the control device 15 is provided, and the air suctioned by the second ventilation fan (the second fan) 45 flows into the fuel cell chamber R1 through the control chamber R3. Accordingly, it is possible to appropriately cool electrical appliances such as the inverter device 13 by the second ventilation fan 45.

Further, according to the above-described first modified example, the second ventilation fan 45 is driven based on the driving signal of the combustion device 18 even when the fuel cell system 100 is in a standby state. Accordingly, it is possible to suppress the exhaust gas of the combustion device 18 from flowing reversely toward the fuel cell chamber R1 due to the discharge action of the second ventilation fan 45 while the combustion device 18 is driven even when the fuel cell system 100 is in a standby state.

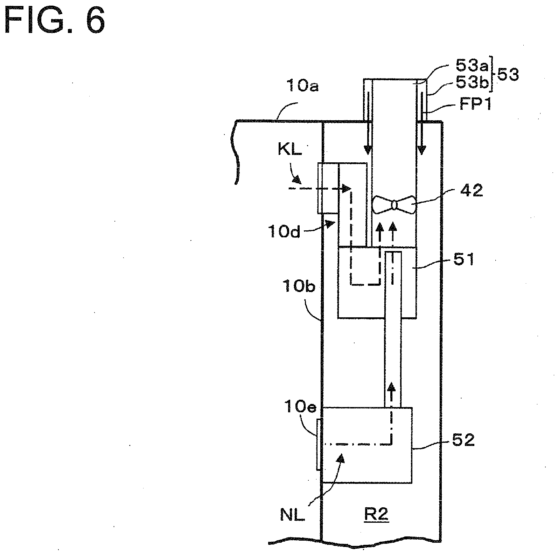

Fig. 6 illustrates a second modified example of the invention. The modified example is different from the above-described embodiment in that the first ventilation fan 42 provided at the ventilation exhaust port 10d of the ventilation exhaust line KL in the above-described embodiment is provided at the downstream side of the merging point where the combustion exhaust gas is discharged from the combustion exhaust duct 52 of the combustion exhaust line NL. That is, the first ventilation fan 42 is disposed at the exhaust unit of the ventilation exhaust line KL extending from the ventilation exhaust port 10d of the fuel cell chamber R1 to the ventilation exhaust duct 51. Further, since the other configurations are the same as those of the embodiment, the same reference numerals and signs will be given to the same components as the embodiment, and the description thereof will not be presented.

While the embodiment of the invention has been described, the invention is not limited to the configuration of the embodiment, and various modifications may be made within the scope of claims.

### DESCRIPTION OF REFERENCE SIGNS

10a: housing, 10c: intake unit (intake port), 10d: exhaust unit (ventilation exhaust port), 11: fuel cell module, 11c: cathode air supply pipe, 11c1: oxidant gas supply device (cathode air blower), 11d: exhaust pipe, 13: inverter device, 15: control device, 18: combustion device, 31: housing, 32: evaporation unit, 34: fuel cell, 36: combustion unit, 41: check valve, 42: first fan (first ventilation fan), 43: temperature sensor, 45: second fan (second ventilation fan), R1: fuel cell chamber, R3: control chamber, KL: ventilation exhaust line, NL: combustion exhaust line

## Claims

1. A combination of a fuel cell system (100) and a combustion device (18), the fuel cell system (100) comprising:
a fuel cell (34) which generates power by fuel and an oxidant gas;
a combustion unit (36) which generates a combustion exhaust gas by burning an anode off-gas from the fuel cell (34) and a cathode off-gas from the fuel cell (34);
an oxidant gas supply device (11c1) which supplies the oxidant gas to the fuel cell (34);
a housing (31) which accommodates the fuel cell (34) and the combustion unit (36);
an air-tight fuel cell chamber (R1) which is provided in an indoor place so as to accommodate at least the housing (31) and the oxidant gas supply device (11c1);
a ventilation exhaust line (KL) which includes an intake unit (10c) introducing air from an outdoor place so as to suction the air into the fuel cell chamber (R1) and an exhaust unit (10d) discharging the air inside the fuel cell chamber (R1) so as to discharge the air into the outdoor place;
a combustion exhaust line (NL) which includes a cathode air supply pipe (11c) causing the inside of the fuel cell chamber (R1) and the fuel cell (34) to communicate with each other so that air including the oxidant gas inside the fuel cell chamber (R1) is supplied to the fuel cell (34) and an exhaust pipe (11d) causing the combustion unit (36) and the outside of the fuel cell chamber (R1) to communicate with each other so that a combustion exhaust gas generated in the combustion unit (36) is discharged to the outdoor place;
a first fan (42) which is provided at the exhaust unit (10d) of the ventilation exhaust line (KL) so as to discharge air from the fuel cell chamber (R1);
a check valve (41) which is provided at the intake unit (10c) of the ventilation exhaust line (KL) and is configured to suppress the circulation of the air into the inside of the fuel cell chamber (R1) from the outside of the fuel cell chamber (R1) in a normal state and to allow the circulation of the air into the inside of the fuel cell chamber (R1) from the outside of the fuel cell chamber (R1) while being opened when the inside of the fuel cell chamber (R1) becomes a negative pressure state; and
a chimney unit (53) formed as a double pipe structure including an inner pipe (53a) and an outer pipe (53b) forming an intake flow channel (FP1) therebetween, wherein
the combustion device (18) is also provided in the indoor place along with the fuel cell system (100) so as to be respectively connected to the intake unit (10c) and the exhaust unit (10d) of the ventilation exhaust line (KL), the combustion device (18) including a chimney (18a) for communication with the chimney unit (53) of the fuel cell system (100),
the intake unit (10c) communicates with the intake flow channel (FP1) and the exhaust unit (10d) communicates with the inner pipe (53a), and
the first fan (42) is adapted to be driven based on a driving signal for the combustion device (18) even when the fuel cell system (100) is in a standby state.

2. A combination of a fuel cell system (100) and a combustion device (18), the fuel cell system (100) comprising:
a fuel cell (34) which generates power by fuel and an oxidant gas;
a combustion unit (36) which generates a combustion exhaust gas by burning an anode off-gas from the fuel cell (34) and a cathode off-gas from the fuel cell (34);
an oxidant gas supply device (11c1) which supplies the oxidant gas to the fuel cell (34);
a housing (31) which accommodates the fuel cell (34) and the combustion unit (36);
an air-tight fuel cell chamber (R1) which is provided in an indoor place so as to accommodate at least the housing (31) and the oxidant gas supply device (11c1);
a ventilation exhaust line (KL) which includes an intake unit (10c) introducing air from an outdoor place so as to suction the air into the fuel cell chamber (R1) and an exhaust unit (10d) discharging the air inside the fuel cell chamber (R1) so as to discharge the air into the outdoor place;
a combustion exhaust line (NL) which includes a cathode air supply pipe (11c) causing the inside of the fuel cell chamber (R1) and the fuel cell (34) to communicate with each other so that air including the oxidant gas inside the fuel cell chamber (R1) is supplied to the fuel cell (34) and an exhaust pipe (11d) causing the combustion unit (36) and the outside of the fuel cell chamber (R1) to communicate with each other so that a combustion exhaust gas generated in the combustion unit (36) is discharged to the outdoor place;
a first fan (42) which is provided at the exhaust unit (10d) of the ventilation exhaust line (KL) so as to discharge air from the fuel cell chamber (R1);
a check valve (41) which is provided at the intake unit (10c) of the ventilation exhaust line (KL) and is configured to suppress the circulation of the air into the inside of the fuel cell chamber (R1) from the outside of the fuel cell chamber (R1) in a normal state and to allow the circulation of the air into the inside of the fuel cell chamber (R1) from the outside of the fuel cell chamber (R1) while being opened when the inside of the fuel cell chamber (R1) becomes a negative pressure state;
a second fan (45) which suctions air from the intake unit (10c) into the fuel cell chamber (R1) and is provided at a suction side or a discharge side of the check valve (41); and
a chimney unit (53) formed as a double pipe structure including an inner pipe (53a) and an outer pipe (53b) forming an intake flow channel (FP1) therebetween, wherein
the combustion device (18) is also provided in the indoor place along with the fuel cell system (100) so as to be respectively connected to the intake unit (10c) and the exhaust unit (10d) of the ventilation exhaust line (KL), the combustion device (18) including a chimney (18a) for communication with the chimney unit (53) of the fuel cell system (100),
the intake unit (10c) communicates with the intake flow channel (FP1) and the exhaust unit (10d) communicates with the inner pipe (53a), and
the second fan (45) is adapted to be driven based on a driving signal for the combustion device (18) even when the fuel cell system (100) is in a standby state.

3. The combination of the fuel cell system (100) and the combustion device (18) according to claim 2, wherein
a control chamber (R3) is provided which is connected to the inside of the fuel cell chamber (R1) and accommodates a control device (15) and an inverter device (13) converting power generated by the fuel cell (34) into AC power, and
air suctioned by the second fan (35) is caused to flow into the fuel cell chamber (R1) through the control chamber (R3).

4. The combination of the fuel cell system (100) and the combustion device (18) according to claim 3, wherein
a temperature sensor (43) is provided inside the control chamber (R3), and
a ventilation error signal is outputted when the temperature sensor (43) detects a state where the temperature inside the control chamber (R3) becomes a determination temperature or higher.

## Patentansprüche

1. Kombination eines Brennstoffzellensystems (100) und einer Verbrennungsvorrichtung (18), wobei das Brennstoffzellensystem (100) Folgendes umfasst:
eine Brennstoffzelle (34), die durch Brennstoff und ein Oxidationsmittelgas Strom erzeugt;
eine Verbrennungseinheit (36), die durch Verbrennen eines Anodenabgases aus der Brennstoffzelle (34) und eines Kathodenabgases aus der Brennstoffzelle (34) ein Verbrennungsabgas erzeugt;
eine Oxidationsmittelgaszufuhrvorrichtung (11c1), die der Brennstoffzelle (34) das Oxidationsmittelgas zuführt;
ein Gehäuse (31), das die Brennstoffzelle (34) und die Verbrennungseinheit (36) beherbergt;
eine luftdichte Brennstoffzellenkammer (R1), die in einem Gebäude vorgesehen ist, um so zumindest das Gehäuse (31) und die Oxidationsmittelgaszufuhrvorrichtung (11c1) zu beherbergen;
eine Ventilationsabsaugstrecke (KL), die eine Einlasseinheit (10c), die Luft aus dem Freien einleitet, um so die Luft in die Brennstoffzellenkammer (R1) zu saugen, und eine Absaugeinheit (10d) aufweist, die die Luft innerhalb der Brennstoffzellenkammer (R1) auslässt, um so die Luft ins Freie auszulassen;
eine Verbrennungsabsaugstrecke (NL), die ein Kathodenluftzufuhrrohr (11c), die das Innere der Brennstoffzellenkammer (R1) und die Brennstoffzelle (34) in Verbindung setzt, sodass Luft, einschließlich dem Oxidationsmittelgas, innerhalb der Brennstoffzellenkammer (R1) der Brennstoffzelle (34) zugeführt wird, und ein Absaugrohr (11d) aufweist, das die Verbrennungseinheit (36) und die Außenseite der Brennstoffzellenkammer (R1) in Verbindung setzt, sodass ein Verbrennungsabgas, das in der Verbrennungseinheit (36) erzeugt wird, zum Freien hin ausgelassen wird;
einen ersten Lüfter (42), der an der Absaugeinheit (10d) der Ventilationsabsaugstrecke (KL) vorgesehen ist, um so Luft aus der Brennstoffzellenkammer (R1) auszulassen;
ein Rückschlagventil (41), das an der Einlasseinheit (10c) der Ventilationsabsaugstrecke (KL) vorgesehen ist und so konfiguriert ist, dass es in einem normalen Zustand die Zirkulation der Luft von außerhalb der Brennstoffzellenkammer (R1) ins Innere der Brennstoffzellenkammer (R1) unterdrückt und die Zirkulation der Luft von außerhalb der Brennstoffzellenkammer (R1) ins Innere der Brennstoffzellenkammer (R1), während es geöffnet wird, zulässt, wenn das Innere der Brennstoffzellenkammer (R1) einen Unterdruckzustand einnimmt; und
eine Kamineinheit (53), die als ein Doppelrohraufbau ausgebildet ist, der ein inneres Rohr (53a) und ein äußeres Rohr (53b) aufweist, die dazwischen einen Einlassströmungskanal (FP1) ausbilden, wobei
die Verbrennungsvorrichtung (18) zusammen mit dem Brennstoffzellensystem (100) ebenfalls im Gebäude vorgesehen ist, um so jeweils mit der Einlasseinheit (10c) und der Auslasseinheit (10d) der Ventilationsabsaugstrecke (KL) verbunden zu sein, wobei die Verbrennungsvorrichtung (18) einen Kamin (18a) zur Verbindung mit der Kamineinheit (53) des Brennstoffzellensystems (100) aufweist,
die Einlasseinheit (10c) mit dem Einlassströmungskanal (FP1) verbunden ist und die Auslasseinheit (10d) mit dem inneren Rohr (53a) verbunden ist und
der erste Lüfter (52) so eingerichtet ist, dass er beruhend auf einem Ansteuerungssignal für die Verbrennungsvorrichtung (18) auch dann angesteuert wird, wenn sich das Brennstoffzellensystem (100) in einem Bereitschaftszustand befindet.

2. Kombination eines Brennstoffzellensystems (100) und einer Verbrennungsvorrichtung (18), wobei das Brennstoffzellensystem (100) Folgendes umfasst:
eine Brennstoffzelle (34), die durch Brennstoff und ein Oxidationsmittelgas Strom erzeugt;
eine Verbrennungseinheit (36), die durch Verbrennen eines Anodenabgases aus der Brennstoffzelle (34) und eines Kathodenabgases aus der Brennstoffzelle (34) ein Verbrennungsabgas erzeugt;
eine Oxidationsmittelgaszufuhrvorrichtung (11c1), die der Brennstoffzelle (34) das Oxidationsmittelgas zuführt;
ein Gehäuse (31), das die Brennstoffzelle (34) und die Verbrennungseinheit (36) beherbergt;
eine luftdichte Brennstoffzellenkammer (R1), die in einem Gebäude vorgesehen ist, um so zumindest das Gehäuse (31) und die Oxidationsmittelgaszufuhrvorrichtung (11c1) zu beherbergen;
eine Ventilationsabsaugstrecke (KL), die eine Einlasseinheit (10c), die Luft aus dem Freien einleitet, um so die Luft in die Brennstoffzellenkammer (R1) zu saugen, und eine Absaugeinheit (10d) aufweist, die die Luft innerhalb der Brennstoffzellenkammer (R1) auslässt, um so die Luft ins Freie auszulassen;
eine Verbrennungsabsaugstrecke (NL), die ein Kathodenluftzufuhrrohr (11c), die das Innere der Brennstoffzellenkammer (R1) und die Brennstoffzelle (34) in Verbindung setzt, sodass Luft, einschließlich dem Oxidationsmittelgas, innerhalb der Brennstoffzellenkammer (R1) der Brennstoffzelle (34) zugeführt wird, und ein Absaugrohr (11d) aufweist, das die Verbrennungseinheit (36) und die Außenseite der Brennstoffzellenkammer (R1) in Verbindung setzt, sodass ein Verbrennungsabgas, das in der Verbrennungseinheit (36) erzeugt wird, zum Freien hin ausgelassen wird;
einen ersten Lüfter (42), der an der Absaugeinheit (10d) der Ventilationsabsaugstrecke (KL) vorgesehen ist, um so Luft aus der Brennstoffzellenkammer (R1) auszulassen;
ein Rückschlagventil (41), das an der Einlasseinheit (10c) der Ventilationsabsaugstrecke (KL) vorgesehen ist und so konfiguriert ist, dass es in einem Normalzustand die Zirkulation der Luft von außerhalb der Brennstoffzellenkammer (R1) ins Innere der Brennstoffzellenkammer (R1) unterdrückt und die Zirkulation der Luft von außerhalb der Brennstoffzellenkammer (R1) ins Innere der Brennstoffzellenkammer (R1), während es geöffnet ist, zulässt, wenn das Innere der Brennstoffzellenkammer (R1) einen Unterdruckzustand einnimmt;
einen zweiten Lüfter (45), der Luft aus der Einlasseinheit (10c) in die Brennstoffzellenkammer (R1) saugt und an einer Saugseite oder einer Auslassseite des Rückschlagventils (41) vorgesehen ist; und
eine Kamineinheit (53), die als ein Doppelrohraufbau ausgebildet ist, der ein Innenrohr (53a) und ein Außenrohr (53b) aufweist, die dazwischen einen Einlassströmungskanal (FP1) ausbilden, wobei
die Verbrennungsvorrichtung (18) zusammen mit dem Brennstoffzellensystem (100) ebenfalls im Gebäude vorgesehen ist, um so jeweils mit der Einlasseinheit (10c) und der Auslasseinheit (10d) der Ventilationsabsaugstrecke (KL) verbunden zu sein, wobei die Verbrennungsvorrichtung (18) einen Kamin (18a) zur Verbindung mit der Kamineinheit (53) des Brennstoffzellensystems (100) aufweist,
die Einlasseinheit (10c) mit dem Einlassströmungskanal (FP1) verbunden ist und die Auslasseinheit (10d) mit dem Innenrohr (53a) verbunden ist und
der zweite Lüfter (45) so eingerichtet ist, dass er beruhend auf einem Ansteuerungssignal für die Verbrennungsvorrichtung (18) auch dann angesteuert wird, wenn sich das Brennstoffzellensystem (100) in einem Bereitschaftszustand befindet.

3. Kombination des Brennstoffzellensystems (100) und der Verbrennungsvorrichtung (18) nach Anspruch 2, wobei
eine Steuerungskammer (R3) vorgesehen ist, die mit dem Inneren der Brennstoffzellenkammer (R1) verbunden ist und eine Steuerungsvorrichtung (15) und eine Wechselrichtervorrichtung (13), die von der Brennstoffzelle (34) erzeugten Strom in Wechselstrom umwandelt, beherbergt, und
Luft, die vom zweiten Lüfter (35) angesaugt wird, dazu gebracht wird, durch die Steuerungskammer (R3) in die Brennstoffzellenkammer (R1) zu strömen.

4. Kombination des Brennstoffzellensystems (100) und der Verbrennungsvorrichtung (18) nach Anspruch 3, wobei
innerhalb der Steuerungskammer (R3) ein Temperatursensor (43) vorgesehen ist und
ein Ventilationsfehlersignal ausgegeben wird, wenn der Temperatursensor (43) einen Zustand erfasst, in dem die Temperatur innerhalb der Steuerungskammer (R3) eine Bestimmungstemperatur oder mehr wird.

## Revendications

1. Combinaison d'un système de pile à combustible (100) et d'un dispositif de combustion (18), le système de pile à combustible (100) comprenant :
une pile à combustible (34) qui génère de l'énergie au moyen d'un combustible et d'un gaz oxydant ;
une unité de combustion (36) qui génère un gaz d'échappement de combustion en brûlant un gaz de dégagement anodique provenant de la pile à combustible (34) et un gaz de dégagement cathodique provenant de la pile à combustible (34) ;
un dispositif d'alimentation en gaz oxydant (11c1) qui délivre le gaz oxydant à la pile à combustible (34) ;
un boîtier (31) qui renferme la pile à combustible (34) et l'unité de combustion (36) ;
une chambre de pile à combustible étanche (R1) qui est prévue dans un endroit intérieur afin de recevoir au moins le boîtier (31) et le dispositif d'alimentation en gaz oxydant (11c1);
une conduite d'échappement de ventilation (KL) qui comprend une unité d'admission (10c) introduisant l'air provenant d'un endroit extérieur afin d'aspirer l'air dans la chambre de pile à combustible (R1) et une unité d'échappement (10d) refoulant l'air à l'intérieur de la chambre de pile à combustible (R1) afin de refouler l'air dans l'endroit extérieur ;
une conduite d'échappement de combustion (NL) qui comprend un tuyau d'alimentation en air cathodique (11c) amenant l'intérieur de la chambre de pile à combustible (R1) et la pile à combustible (34) à communiquer l'un avec l'autre de sorte que de l'air comprenant le gaz oxydant à l'intérieur de la chambre de pile à combustible (R1) soit délivré à la pile à combustible (34) et un tuyau d'échappement (11d) amenant l'unité de combustion (36) et l'extérieur de la chambre de pile à combustible (R1) à communiquer l'une avec l'autre de sorte qu'un gaz d'échappement de combustion généré dans l'unité de combustion (36) soit refoulé vers l'endroit extérieur ;
un premier ventilateur (42) qui est prévu au niveau de l'unité d'échappement (10d) de la conduite d'échappement de ventilation (KL) afin de refouler l'air provenant de la chambre de pile à combustible (R1) ;
un clapet antiretour (41) qui est prévu au niveau de l'unité d'admission (10c) de la conduite d'échappement de ventilation (KL) et est configuré pour supprimer la circulation de l'air à l'intérieur de la chambre de pile à combustible (R1) en provenance de l'extérieur de la chambre de pile à combustible (R1) dans un état normal et pour permettre la circulation de l'air à l'intérieur de la chambre de pile à combustible (R1) en provenance de l'extérieur de la chambre de pile à combustible (R1) tandis qu'il est ouvert lorsque l'intérieur de la chambre de pile à combustible (R1) entre dans un état de pression négative ; et
une unité de cheminée (53) formée comme une structure à deux tuyaux comprenant un tuyau intérieur (53a) et un tuyau extérieur (53b) formant un canal d'écoulement d'admission (FP1) entre eux, dans laquelle
le dispositif de combustion (18) est également prévu dans l'endroit intérieur en même temps que le système de pile à combustible (100) afin d'être respectivement relié à l'unité d'admission (10c) et à l'unité d'échappement (10d) de la conduite d'échappement de ventilation (KL), le dispositif de combustion (18) comprenant une cheminée (18a) pour la communication avec l'unité de cheminée (53) du système de pile à combustible (100),
l'unité d'admission (10c) communique avec le canal d'écoulement d'admission (FP1) et l'unité d'échappement (10d) communique avec le tuyau intérieur (53a), et
le premier ventilateur (42) est adapté pour être entraîné sur la base d'un signal d'entraînement pour le dispositif de combustion (18) même lorsque le système de pile à combustible (100) est en état de veille.

2. Combinaison d'un système de pile à combustible (100) et d'un dispositif de combustion (18), le système de pile à combustible (100) comprenant :
une pile à combustible (34) qui génère de l'énergie au moyen d'un combustible et d'un gaz oxydant ;
une unité de combustion (36) qui génère un gaz d'échappement de combustion en brûlant un gaz de dégagement anodique provenant de la pile à combustible (34) et un gaz de dégagement cathodique provenant de la pile à combustible (34) ;
un dispositif d'alimentation en gaz oxydant (11c1) qui délivre le gaz oxydant à la pile à combustible (34) ;
un boîtier (31) qui renferme la pile à combustible (34) et l'unité de combustion (36) ;
une chambre de pile à combustible étanche (R1) qui est prévue dans un endroit intérieur afin de recevoir au moins le boîtier (31) et le dispositif d'alimentation en gaz oxydant (11c1) ;
une conduite d'échappement de ventilation (KL) qui comprend une unité d'admission (10c) introduisant l'air provenant d'un endroit extérieur afin d'aspirer l'air dans la chambre de pile à combustible (R1) et une unité d'échappement (10d) refoulant l'air à l'intérieur de la chambre de pile à combustible (R1) afin de refouler l'air dans l'endroit extérieur ;
une conduite d'échappement de combustion (NL) qui comprend un tuyau d'alimentation en air cathodique (11c) amenant l'intérieur de la chambre de pile à combustible (R1) et la pile à combustible (34) à communiquer l'un avec l'autre de sorte que de l'air comprenant le gaz oxydant à l'intérieur de la chambre de pile à combustible (R1) soit délivré à la pile à combustible (34) et un tuyau d'échappement (11d) amenant l'unité de combustion (36) et l'extérieur de la chambre de pile à combustible (R1) à communiquer l'une avec l'autre de sorte qu'un gaz d'échappement de combustion généré dans l'unité de combustion (36) soit refoulé vers l'endroit extérieur ;
un premier ventilateur (42) qui est prévu au niveau de l'unité d'échappement (10d) de la conduite d'échappement de ventilation (KL) afin de refouler l'air provenant de la chambre de pile à combustible (R1) ;
un clapet antiretour (41) qui est prévu au niveau de l'unité d'admission (10c) de la conduite d'échappement de ventilation (KL) et est configuré pour supprimer la circulation de l'air à l'intérieur de la chambre de pile à combustible (R1) en provenance de l'extérieur de la chambre de pile à combustible (R1) dans un état normal et pour permettre la circulation de l'air à l'intérieur de la chambre de pile à combustible (R1) en provenance de l'extérieur de la chambre de pile à combustible (R1) tandis qu'il est ouvert lorsque l'intérieur de la chambre de pile à combustible (R1) entre dans un état de pression négative ; et
un second ventilateur (45) qui aspire l'air provenant de l'unité d'admission (10c) dans la chambre de pile à combustible (R1) et est prévu au niveau d'un côté aspiration ou d'un côté refoulement du clapet antiretour (41) ; et
une unité de cheminée (53) formée comme une structure à deux tuyaux comprenant un tuyau intérieur (53a) et un tuyau extérieur (53b) formant un canal d'écoulement d'admission (FP1) entre eux, dans laquelle
le dispositif de combustion (18) est également prévu dans l'endroit intérieur en même temps que le système de pile à combustible (100) afin d'être respectivement relié à l'unité d'admission (10c) et à l'unité d'échappement (10d) de la conduite d'échappement de ventilation (KL), le dispositif de combustion (18) comprenant une cheminée (18a) pour la communication avec l'unité de cheminée (53) du système de pile à combustible (100),
l'unité d'admission (10c) communique avec le canal d'écoulement d'admission (FP1) et l'unité d'échappement (10d) communique avec le tuyau intérieur (53a), et
le second ventilateur (45) est adapté pour être entraîné sur la base d'un signal d'entraînement pour le dispositif de combustion (18) même lorsque le système de pile à combustible (100) est en état de veille.

3. Combinaison du système de pile à combustible (100) et du dispositif de combustion (18) selon la revendication 2, dans laquelle
une chambre de commande (R3) est prévue, qui est reliée à l'intérieur de la chambre de pile à combustible (R1) et reçoit un dispositif de commande (15) et un dispositif formant onduleur (13) convertissant l'énergie générée par la pile à combustible (34) en courant alternatif, et
l'air aspiré par le second ventilateur (35) est amené à circuler dans la chambre de pile à combustible (R1) à travers la chambre de commande (R3).

4. Combinaison du système de pile à combustible (100) et du dispositif de combustion (18) selon la revendication 3, dans laquelle
un capteur de température (43) est prévu à l'intérieur de la chambre de commande (R3), et
un signal d'erreur de ventilation est émis lorsque le capteur de température (43) détecte un état dans lequel la température à l'intérieur de la chambre de commande (R3) devient une température de détermination ou supérieure.
